# EUROPEAN PATENT APPLICATION

(11) **EP 4 647 705 A1**
(43) Date of publication of application: **12.11.2025**
(21) Application number: 24780381.0
(22) Date of filing: 26.03.2024
(51) Int. Cl.: F28F 3/08, F28D 9/00, F28F 3/00, F28F 3/06

(54) **HEAT EXCHANGER AND METHOD FOR MANUFACTURING HEAT EXCHANGER**

(30) Priority: 31.03.2023 JP 2023059019
(71) Applicant: Daikin Industries, Ltd., Osaka-shi, Osaka 530-0001 (JP)
(72) Inventor: UKAI, Takuya, Osaka-shi, Osaka 530-0001 (JP); ITO, Masatoshi, Osaka-shi, Osaka 530-0001 (JP); SUSA, Toshihiro, Osaka-shi, Osaka 530-0001 (JP)
(74) Representative: Hoffmann Eitle
(86) International application number: PCT/JP2024/012089
(87) International publication number: WO 2024/204273

(57) **Abstract**

A heat exchanger includes layer members (110) and partition members (120). Each of the plurality of layer members (110) includes a flow path member (111) and a spacer member (112). The plurality of layer members (110) include layer members (110) of which the number is M. The number M is a natural number that is larger than or equal to two. The plurality of layer members (110) include an arbitrary layer member (E) that includes layer members (110) of which the number is N among the layer members (110) of which the number is M. The number N is a natural number that is larger than or equal to two and smaller than or equal to M. A first difference, which is an absolute value of a difference between a sum of dimensions of all the flow path members (111) that form the arbitrary layer member (E) and a sum of dimensions of all the spacer members (112) that form the arbitrary layer member (E) in the stacking direction (V1), is 100 µm or less.

## Description

### TECHNICAL FIELD

The present disclosure relates to a heat exchanger and a method of manufacturing the heat exchanger.

### BACKGROUND ART

Patent Document 1 discloses a heat exchanger. The heat exchanger of Patent Document 1 has a structure in which tube plates (partition members) with a pair of spacer bars (spacer members) sandwiched therebetween are stacked, whereby a plurality of fluid passages are stacked. Each fluid passage is equipped with corrugated fins (flow passage members) along the flow direction.

### CITATION LIST

### PATENT DOCUMENT

Patent Document 1: Japanese Utility Model Publication No. H4-63989

### SUMMARY OF THE INVENTION

### TECHNICAL PROBLEM

A heat exchanger is manufactured by joining components of the heat exchanger by brazing. However, due to variations in the thickness of the rolled material used for the heat exchanger and in the press forming process, there is a possibility that a height difference of several tens of micrometers may occur between the components of each layer of the heat exchanger. Due to this height difference, the joint surfaces between the components of the heat exchanger may not be fully filled with brazing material, resulting in gaps between the joint surfaces and potentially causing poor bonding. In order to eliminate bonding defects between the components of the heat exchanger, the height of the components was adjusted for each layer of the heat exchanger. However, the operation of adjusting the height for each layer was complicated.

An object of the present disclosure is to provide a heat exchanger that can be easily manufactured.

### SOLUTION TO THE PROBLEM

A heat exchanger according to a first aspect includes: a plurality of layer members (110) that are stacked; and a partition member (120) between the plurality of layer members (110) adjacent to each other, wherein each of the plurality of layer members (110) includes a flow path member (111) forming a flow path of a refrigerant, and a spacer member (112) disposed in a direction perpendicular to a stacking direction (V1) of the layer members (110) with respect to the flow path member (111), the plurality of layer members (110) include layer members (110) of which the number is M, the number M is a natural number that is larger than or equal to two, the plurality of layer members (110) include an arbitrary layer member (E) that includes layer members (110) of which the number is N among the layer members (110) of which the number is M, the number N is a natural number that is larger than or equal to two and smaller than or equal to M, and A first difference, which is an absolute value of a difference between a sum of dimensions of all the flow path members (111) that form the arbitrary layer member (E) and a sum of dimensions of all the spacer members (112) that form the arbitrary layer member (E) in the stacking direction (V1), is 100 µm or less.

According to the first aspect, the heat exchanger can be easily manufactured.

In a second aspect, the first difference is 50 µm or less.

According to the second aspect, the first difference can be 50 µm or less.

A third aspect is an embodiment of the second aspect. In the third aspect, the first difference is 10 µm or less.

According to the third aspect, the first difference can be 10 µm or less.

A fourth aspect is an embodiment of any one of the first to third aspects. In the fourth aspect, in each of the plurality of the layer members (110), an absolute value of a difference between a dimension of the flow path member (111) and a dimension of the spacer member (112) in the stacking direction (V1) is 10 µm or less.

According to the fourth aspect, in each of the plurality of the layer members (110) of the heat exchanger (1), the difference between the dimension of the flow path member (111) and the dimension of the spacer member (112) can be restricted.

A fifth aspect is an embodiment of any one of the first to fourth aspects. In the fifth aspect, the partition member (120) includes a deformed partition member (120A) having a deformed portion (123) that is bent or curved.

According to the fifth aspect, the difference between the dimension of the spacer member (112) and the dimension of the flow path member (111) can be absorbed by the deformed partition member (120A) deformed at the deformed portion (123).

A sixth aspect is an embodiment of the fifth aspect. In the sixth aspect, the deformed portion (123) is located between a place (124) and a place (125a), where the place (124) is a part of a joint portion between the deformed partition member (120A) and the spacer member (112) that is closest to the flow path member (111), and the place (125a) is a part of a joint portion (125) between the deformed partition member (120A) and the flow path member (111) that is closest to the spacer member (112).

According to the sixth aspect, the deformed partition member (120A) can be deformed in an area between the joint portion of the spacer member (112) to the deformed partition member (120A) and the joint portion of the flow path member (111) to the deformed partition member (120A).

A seventh aspect is an embodiment of any one of the first to sixth aspects. In the seventh aspect, a second difference, which is an absolute value of a difference between a sum of dimensions of all the flow path members (111) that form the plurality of layer members (110) and a sum of dimensions of all the spacer members (112) that form the plurality of layer members (110) in the stacking direction (V1), is 5 × M µm or less.

According to the seventh aspect, the second difference can be restricted in consideration of the total number of the plurality of layer members (110).

An eighth aspect is an embodiment of the seventh aspect. In the eighth aspect, the second difference is 2 × M µm or less.

According to the eighth aspect, the second difference can be 2 × N µm or less.

A ninth aspect is an embodiment of any one of the first to eighth aspects. In the ninth aspect, the partition member (120) and the layer member (110) adjacent to each other in the stacking direction (V1) are joined to each other by a brazing material (S), in at least one of the plurality of layer members (110), an absolute value of a difference between a dimension of the spacer member (112) and a dimension of the flow path member (111) is greater in the stacking direction (V1) than a dimension of the brazing material (S).

According to the ninth aspect, the heat exchanger (1) can be easily manufactured.

A heat exchanger according to a tenth aspect includes: a plurality of layer members (110) that are stacked; and a partition member (120) between the plurality of layer members (110) adjacent to each other, wherein each of the plurality of layer members (110) includes a flow path member (111) forming a flow path of a refrigerant, and a spacer member (112), the flow path member (111) includes a plurality of flow path members (111), each of which includes a first portion (1111) disposed in a direction perpendicular to a stacking direction (V1) of the layer members (110) with respect to the spacer member (112), and a second portion (1112) sandwiched between the spacer member (112) and the partition member (120), the plurality of layer members (110) include an arbitrary layer member (E) that includes two or more of the plurality of layer members (110), and a third difference, which is an absolute value of a difference between a sum of dimensions of the first portions (1111) of all the flow path members (111) that form the arbitrary layer member (E) and a sum of dimensions of the second portions (1112) of all the flow path members (111) that form the arbitrary layer member (E) and dimensions of all the spacer members (112) in the stacking direction (V1), is 100 µm or less.

According to the tenth aspect, the heat exchanger can be easily manufactured.

An eleventh aspect is an embodiment of any one of the first to tenth aspects. In the eleventh aspect, the heat exchanger includes an insertion portion (400) into which an insertion member (P) provided with a refrigerant pipe (P1) is inserted.

According to the eleventh embodiment, the heat exchanger can be equipped with the insertion member (P).

A twelfth aspect is an embodiment of the eleventh aspect. In the twelfth aspect, the insertion portion (400) includes a locking portion (410) that locks an end portion (P3) of the insertion member (P), and the locking portion (410) has a C-shape or a hook shape.

According to the twelfth aspect, the insertion member (P) can be supported by the locking portion (410) that has a C-shape or a hook shape.

A thirteenth aspect is an embodiment of the eleventh or twelfth aspect. In the thirteenth aspect, the insertion portion (400) includes a slit portion (420) into which the insertion member (P) is inserted.

According to the thirteenth aspect, the insertion member (P) can be supported by the slit portion (420).

A fourteenth aspect is an embodiment of any one of the first to thirteenth aspects. In the fourteenth aspect, the flow path member (111) includes a plurality of mountain portions (111a) raised toward one direction side (V11) of the stacking direction (V1) and a plurality of valley portions (111b) raised toward another direction side (V12) of the stacking direction (V1), the plurality of mountain portions (111a) and the plurality of valley portions (111b) are arranged alternately in the stacking direction (V1), the partition member (120) includes a first partition member located on the one direction side (V11) of the stacking direction (V1) with respect to the flow path member (111) and a second partition member located on the other direction side (V12) of the stacking direction (V1) with respect to the flow path member (111), and at least one of the first partition member and the second partition member has a bent or curved shape so that each of the plurality of mountain portions (111a) of the flow path member (111) is joined to the first partition member using a brazing material, and each of the plurality of valley portions (111b) of the flow path member (111) is joined to the second partition member using a brazing material.

According to the fourteenth aspect, the partition member (120) is bent or curved, whereby the flow path member (111) and the spacer member (112) can be effectively joined to the partition member (120) while a gap is less created between the joint surfaces of the components of the heat exchanger.

A fifteenth aspect is directed to a method for manufacturing a heat exchanger including: a plurality of layer members (110) that are stacked; and a partition member (120) between the plurality of layer members (110) adjacent to each other, wherein each of the plurality of layer members (110) includes a flow path member (111) forming a flow path of a refrigerant, and a spacer member (112) disposed in a direction perpendicular to a stacking direction (V1) of the layer members (110) with respect to the flow path member (111), the plurality of layer members (110) include an arbitrary layer member (E) that includes two or more of the plurality of layer members (110), and a first difference, which is an absolute value of a difference between a sum of dimensions of all the flow path members (111) that form the arbitrary layer member (E) and a sum of dimensions of all the spacer members (112) that form the arbitrary layer member (E) in the stacking direction (V1), is 100 µm or less. The method of manufacturing the heat exchanger includes brazing the partition member (120), the flow path member (111), and the spacer member (112), while deforming the partition member (120).

According to the fifteenth aspect, the heat exchanger can be easily manufactured.

### BRIEF DESCRIPTION OF THE DRAWINGS

[FIG. 1] FIG. 1 is a perspective view showing a part of a heat exchanger.
[FIG. 2] FIG. 2 is an exploded perspective view of the heat exchanger shown in FIG. 1.
[FIG. 3] FIGS. 3A and 3B are perspective views showing that an insertion member is inserted into an insertion portion of the heat exchanger.
[FIG. 4] FIG. 4A is a plan view of a first plate member. FIG. 4B is a plan view of a second plate member.
[FIG. 5] FIG. 5A is a plan view of a first spacer member. FIG. 5B is a plan view of a second spacer member.
[FIG. 6] FIG. 6 is a plan view of a partition member.
[FIG. 7] FIG. 7 is a plan view showing that an insertion member is inserted into an insertion portion of the heat exchanger.
[FIG. 8] FIGS. 8A and 8B are cross-sectional views showing that a refrigerant flows through flow path members.
[FIG. 9] FIGS. 9A and 9B are cross-sectional views of the components of the heat exchanger before brazing.
[FIG. 10] FIGS. 10A and 10B are cross-sectional views of the components of the heat exchanger after brazing.
[FIG. 11] FIGS. 11A and 11B are cross-sectional views of the components of the heat exchanger after brazing.
[FIG. 12] FIG. 12 is a partial cross-sectional view showing a variation of the heat exchanger.
[FIG. 13] FIG. 13A is a plan view showing a C-shaped locking portion. FIG. 13B is a plan view showing a hook-shaped locking portion.
[FIG. 14] FIG. 14A is a plan view showing a slit portion. FIG. 14B is a perspective view showing that an insertion member is inserted into an insertion portion of the heat exchanger.

### DESCRIPTION OF EMBODIMENTS

An embodiment of the present disclosure will be described in detail below with reference to the drawings. The present disclosure is not limited to the embodiment shown below, and various changes can be made within the scope without departing from the technical concept of the present disclosure. Since each of the drawings is intended to illustrate the present disclosure conceptually, dimensions, ratios, or numbers may be exaggerated or simplified as necessary for ease of understanding. The same reference characters denote the same or equivalent components in each embodiment, each variation, and the drawings, and the detailed description thereof, the description of advantages associated therewith, and other descriptions will not be repeated.

### (1) General Configuration

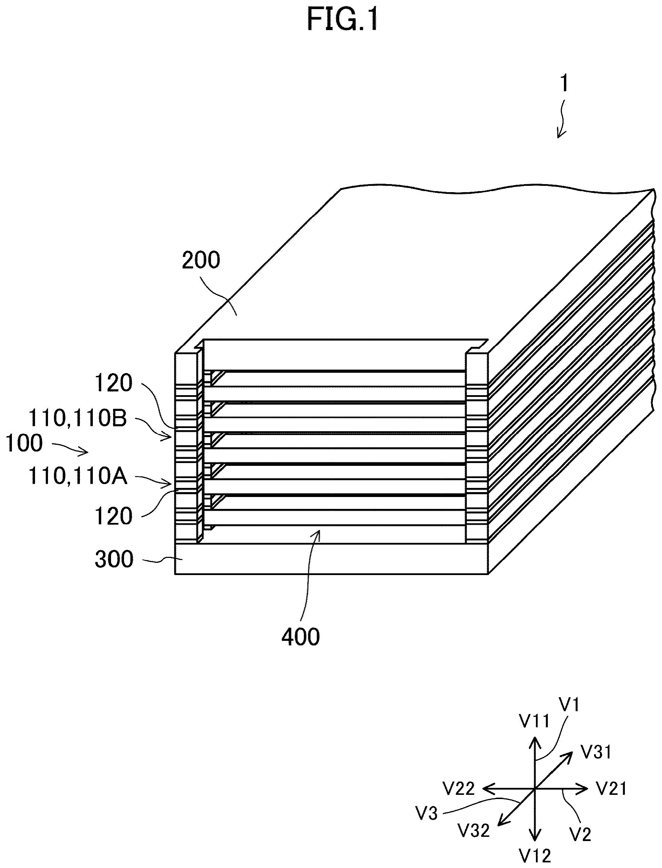

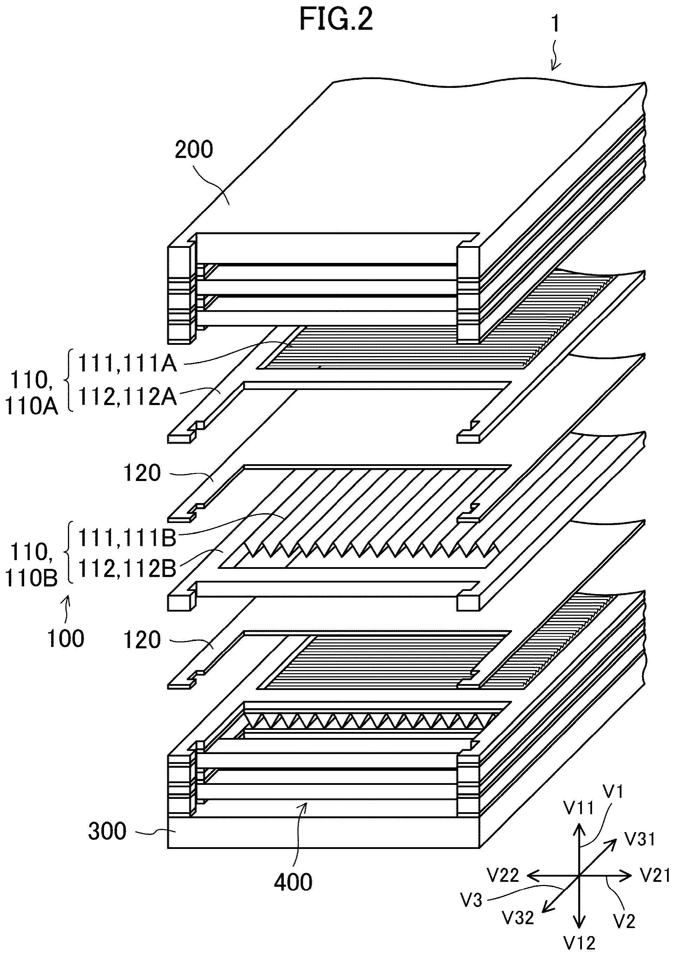

A heat exchanger (1) according to an embodiment is an apparatus that performs heat exchange between a plurality of fluids. The heat exchanger (1) is made of a metal material, such as stainless steel or aluminum. As shown in FIGS. 1 and 2, the heat exchanger (1) includes a layered body (100), a first plate member (200), and a second plate member (300).

The layered body (100) includes a plurality of layer members (110) and partition members (120). The plurality of layer members (110) are stacked in a first direction (V1). The first direction (V1) is the direction in which the layer members (110) are stacked. Each of the plurality of layer members (110) includes a flow path member (111) and a spacer member (112).

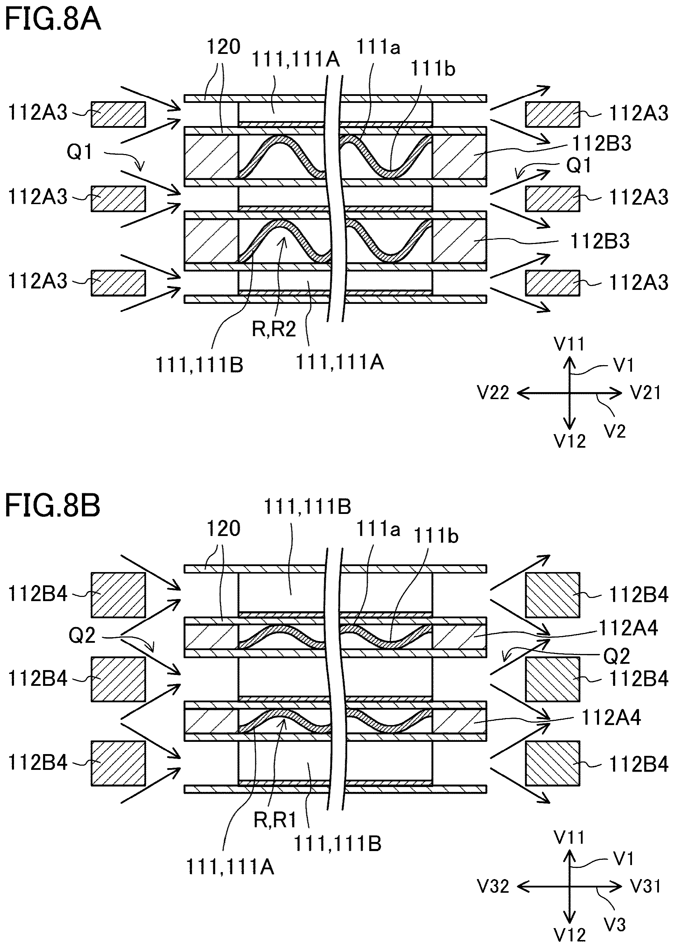

The flow path member (111) forms a flow path of the refrigerant. The flow path member (111) includes mountain portions (111a) raised toward one direction side (V11) of the first direction (V1) and valley portions (111b) raised toward the other direction side (V12) of the first direction (V1) (see FIGS. 8A and 8B). The flow path member (111) is shaped in a corrugated plate with the mountain portions (111a) and the valley portions (111b) arranged alternately (see FIGS. 8A and 8B).

The spacer member (112) secures a space in which the flow path member (111) is installed. The spacer member (112) is arranged in the direction perpendicular to the first direction (V1) (the direction in which the layer members (110) are stacked). In this embodiment, the direction perpendicular to the first direction (V1) includes a second direction (V2) and a third direction (V3) by definition. The first direction (V1), the second direction (V2), and the third direction (V3) are perpendicular to each other.

In this embodiment, the plurality of layer members (110) include two types of layer members. The two types of layer members are first layer members (110A) and second layer members (110B). The first layer members (110A) and the second layer members (110B) are arranged alternately in the first direction (V1). The layer members (110) may include three or more types of layer members, and the three or more types of layer members may be arranged sequentially and repeatedly in the first direction (V1).

Hereinafter, the flow path member (111) of the first layer member (110A) may be referred to as "the first flow path member (111A)," and the flow path member (111) of the second layer member (110B) may be referred to as "the second flow path member (111B)." The spacer member (112) of the first layer member (110A) may be referred to as "the first spacer member (112A)," and the spacer member (112) of the second layer member (110B) may be referred to as "the second spacer member (112B)."

The mountain portions (111a) and the valley portions (111b) of the first flow path member (111A) extend in the third direction (V3). The first flow path member (111A) sends the refrigerant in the third direction (V3). The mountain portions (111a) and the valley portions (111b) of the second flow path member (111B) extend in the second direction (V2). The second flow path member (111B) sends the refrigerant in the second direction (V2). In this embodiment, the first flow path member (111A) and the second flow path member (111B) send the refrigerant in the directions perpendicular to each other. The direction in which the refrigerant is sent by the first flow path member (111A) of the first layer member (110A) and the direction in which the refrigerant is sent by the second flow path member (111B) are not limited to particular directions.

The first flow path members (111A) and the second flow path members (111B) send different types of refrigerants. In this embodiment, one of the first flow path member (111A) or the second flow path member (111B) may send propane as a refrigerant, and the other one of the flow path members sends water as a refrigerant. One of the first flow path member (111A) or the second flow path member (111B) may send propane as a refrigerant, and the other one of the flow path members may send CO₂ as a refrigerant. One of the first flow path member (111A) or the second flow path member (111B) may send the water as a refrigerant, and the other one of the flow path members may send CO₂ as a refrigerant.

The flow path member (111) forms a flow path (R) through which a refrigerant flows. Hereinafter, the refrigerant flowing through the first flow path (R1) formed by the first flow path member (111A) may be referred to as a first refrigerant, and the refrigerant flowing through the second flow path (R2) formed by the second flow path member (111B) may be referred to as a second refrigerant. The first flow path (R1) extends in the second direction (V2). The second flow path (R2) extends in the third direction (V3).

The partition member (120) is a flat plate member. The partition member (120) is disposed between the layer members (110) adjacent to each other. In this embodiment, the partition member (120) is disposed between the first layer member (110A) and the second layer member (110B).

The first plate member (200) is a flat plate member. The first plate member (200) faces the layered body (10) from the one direction side (V11) of the first direction (V1). The first plate member (200) is located on the uppermost side of the one direction side (V11) of the first direction (V1).

The second plate member (300) is a flat plate member. The second plate member (300) faces the layered body (10) from the other direction side (V12) of the first direction (V1). The second plate member (300) is located on the lowermost side of the other direction side (V12) of the first direction (V1).

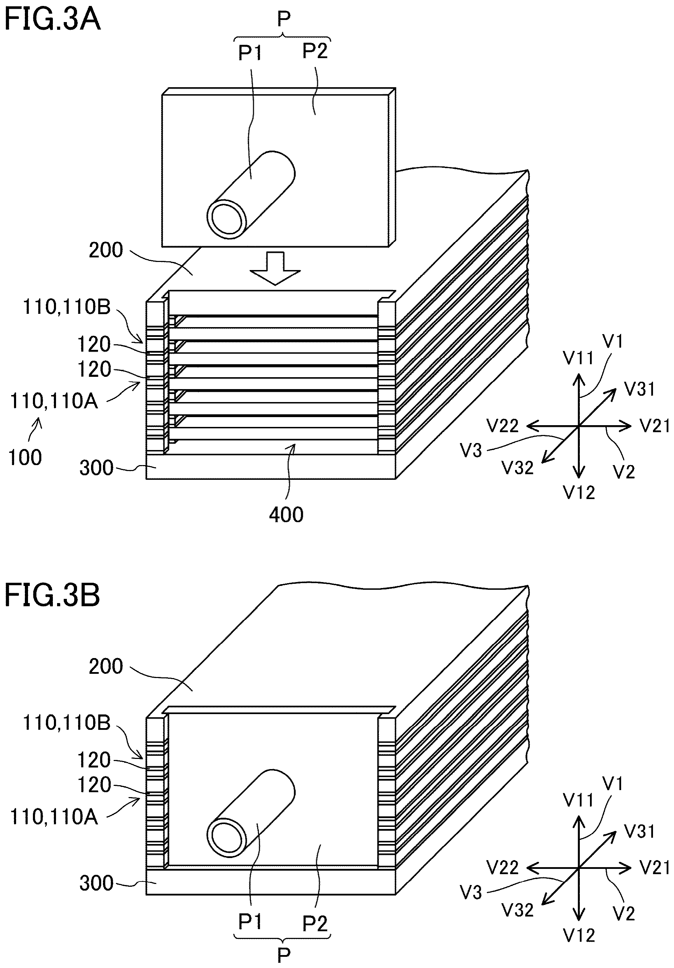

As shown in FIGS. 3A and 3B, the heat exchanger (1) includes an insertion portion (400) into which an insertion member (P) is inserted. The insertion member (P) includes a refrigerant pipe (P1) and a plate portion (P2). The refrigerant pipe (P1) is a tubular member for sending a refrigerant. The plate portion (P2) is a plate-shaped member and is inserted into the insertion portion (400). The plate portion (P2) is a plate-shaped member. The plate portion (P2) is provided with the refrigerant pipe (P1). The plate portion (P2) has a hole through which the refrigerant passes, and this hole communicates with the inside of the refrigerant pipe (P1) and faces the heat exchanger (1). Through the refrigerant pipe (P1), the refrigerant is sent to the heat exchanger (1). Four insertion portions (400) and four refrigerant pipes (P1) in total are provided on both sides of the second direction (V2) and both sides of the third direction (V3). In FIGS. 1 to 3B, only one insertion portion (400) and one insertion member (P) are provided and the remaining three insertion portions (400) and three insertion members (P) are not shown.

### (2) Components of Heat Exchanger

### (2-1) First Plate Member

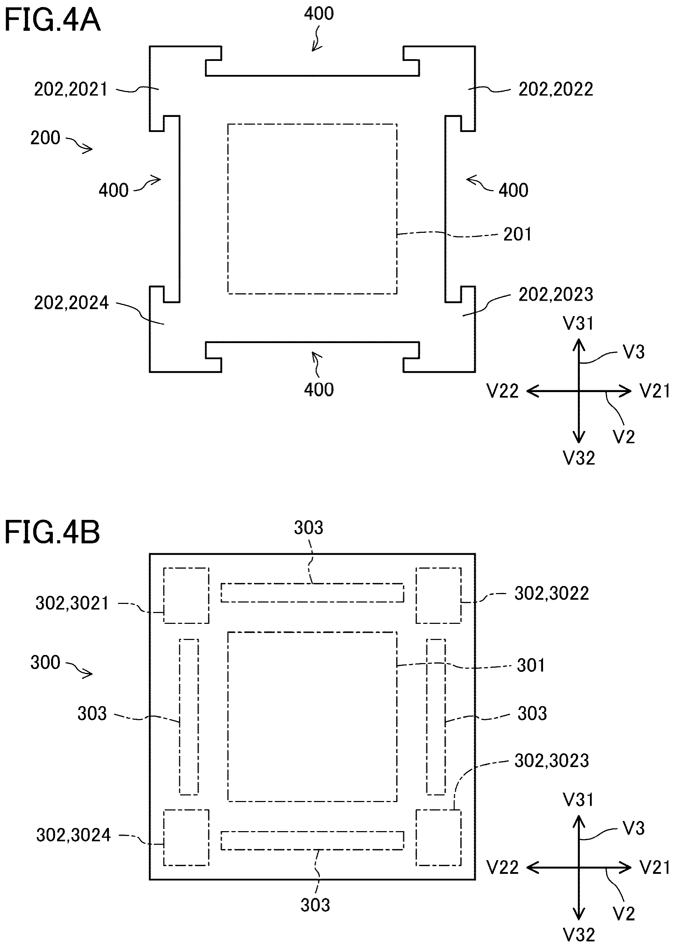

As shown in FIG. 4A, the first plate member (200) includes a facing portion (201) and corner portions (202). The facing portion (201) faces the flow path member (111). The facing portion (201) is provided at the center of the first plate member (200). The corner portions (202) include a first corner portion (2021) to a fourth corner portion (2024) and are provided at the four corners of the first plate member (200). The insertion portion (400) is formed between the corner portions (202) adjacent to each other.

### (2-2) Second Plate Member

As shown in FIG. 4B, the second plate member (300) includes a facing portion (301), corner portions (302), and mount portions (303). The facing portion (301) faces the flow path member (111). The facing portion (301) is provided at the center of the second plate member (300). The corner portions (302) include a first corner portion (3021) to a fourth corner portion (3024) and are provided at the four corners of the second plate member (300). The mount portion (303) is located between the corner portions (302) adjacent to each other. On the mount portion (303), the insertion member (P) inserted into the insertion portion (400) is mounted.

### (2-3) First Spacer Member

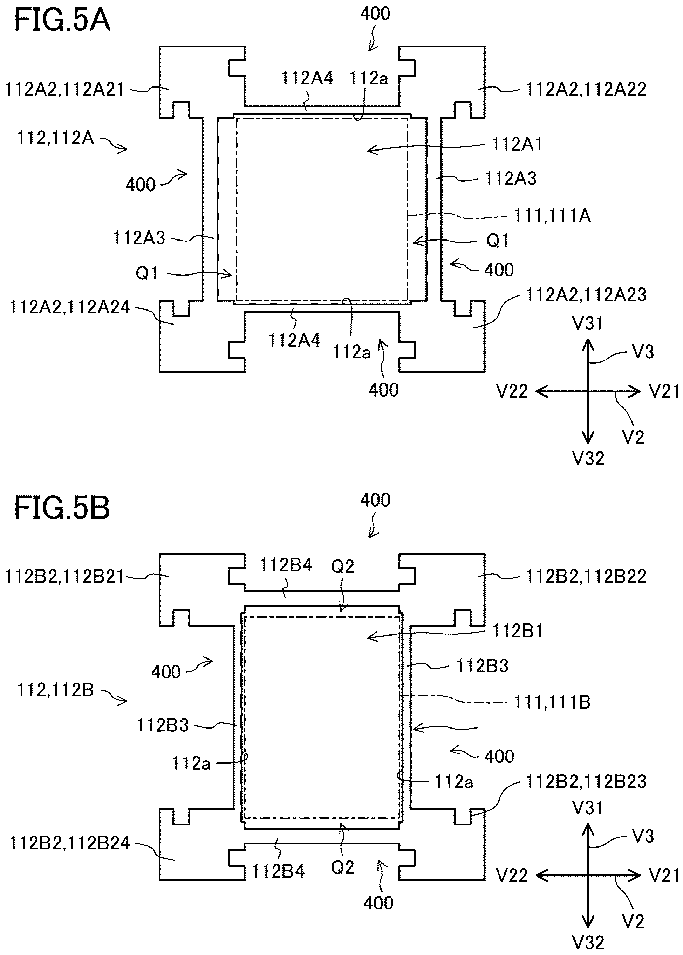

As shown in FIG. 5A, the first spacer member (112A) includes an arrangement portion (112A1), corner portions (112A2), a pair of first frame portions (112A3), and a pair of second frame portions (112A4). The pair of first frame portions (112A3) are spaced in the second direction (V2) from each other and extend in the third direction (V3) in parallel to each other. The pair of second frame portions (112A4) are spaced in the third direction (V3) from each other and extend in the second direction (V2) in parallel to each other. The pair of first frame portions (112A3) and the pair of second frame portions (112A4) form a substantially rectangular frame, and the arrangement portion (112A1) is located in this frame. The arrangement portion (112A1) is a vacant space that is provided for arranging the first flow path member (111A), and that penetrates the first spacer member (112A) in the first direction (V1). The arrangement portion (112A1) is provided at the center of the first spacer member (112A). The corner portions (112A2) include a first corner portion (112A21) to a fourth corner portion (112A24) and are provided at the four corners of the first spacer member (112A). The insertion portion (400) is formed between the corner portions (112A2) adjacent to each other. The first frame portions (112A3) and the second frame portions (112A4) are continuous via the corner portions (112A2). The first flow path member (111A) is attached to the first frame portion (112A3). There is a gap (Q1) between the second frame portion (112A4) and the first flow path member (111A).

### (2-4) Second Spacer Member

As shown in FIG. 5B, the second spacer member (112B) includes an arrangement portion (112B1), corner portions (112B2), a pair of third frame portions (112B3), and a pair of fourth frame portions (112B4). The pair of third frame portions (112B3) are spaced in the second direction (V2) from each other and extend in the third direction (V3) in parallel to each other. The pair of fourth frame portions (112B4) are spaced in the third direction (V3) from each other and extend in the second direction (V2) in parallel to each other. The pair of third frame portions (112B3) and the pair of fourth frame portions (112B4) form a substantially rectangular frame, and the arrangement portion (112B1) is located in this frame. The arrangement portion (112B1) is a vacant space that is provided for arranging the second flow path member (111B), and that penetrates the second spacer member (112B) in the first direction (V1). The arrangement portion (112B1) is provided at the center of the second spacer member (112B). The corner portions (112B2) include a first corner portion (112B21) to a second corner portion (112B24) and are provided at the four corners of the arrangement portion (112B1). The insertion portion (400) is formed between the corner portions (112B2) adjacent to each other. The third frame portion (112B3) and the fourth frame portion (112B4) are continuous via the corner portions (112B2). The second flow path member (111B) is attached to the third frame portion (112B3). There is a gap (Q2) between the fourth frame portion (112B4) and the second flow path member (111B).

### (2-5) Partition Member

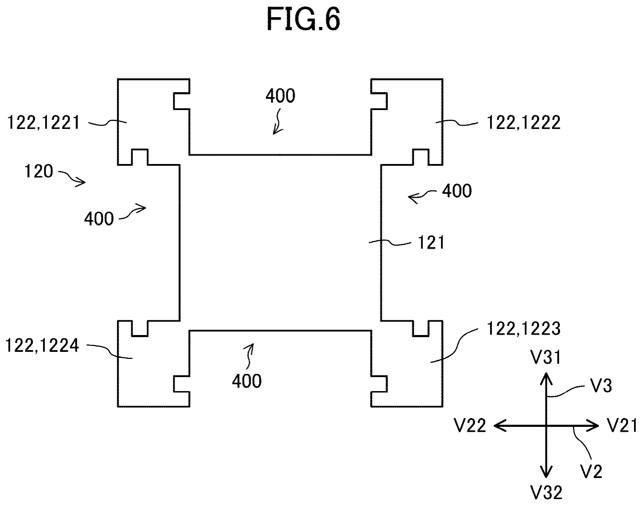

As shown in FIG. 6, the partition member (120) includes a facing portion (121) and corner portions (122). The facing portion (121) faces the flow path member (111). The facing portion (121) is provided at the center of the partition member (120). The corner portions (122) include a first corner portion (1221) to a fourth corner portion (1224) and are provided at the four corners of the facing portion (121). The insertion portion (400) is formed between the corner portions (122) adjacent to each other.

The n-th corner portion (202n) of the first plate member (200), the n-th corner portion (302n) of the second plate member (300), the n-th corner portion (112A2n) of the first spacer member (112A), the n-th corner portion (112B2n) of the second spacer member (112B), and the n-th corner portion (122n) of the partition member (120) are stacked in the first direction (V1), where n is a natural number that is larger than or equal to one and smaller than or equal to four.

FIG. 5A illustrates the first flow path member (111A). The gap (Q1) is formed between the first flow path member (111A) and each of the pair of first frame portions (112A3), and both end portions (111C) of the first flow path member (111A) in the third direction (V3) are fitted into grooves (112a) of the pair of second frame portions (112A4) of the first spacer member (112A), whereby the first flow path member (111A) is attached to the first spacer member (112A). FIG. 5B illustrates the second flow path member (111B). The gap (Q2) is formed between the second flow path member (111B) and each of the pair of second frame portions (112B4), and both end portions (111C) of the second flow path member (111B) in the second direction (V2) are fitted into grooves (112a) of the pair of third frame portions (112B3) of the second spacer member (112B), whereby the second flow path member (111B) is attached to the second spacer member (112B).

### (3) Flow of Refrigerants

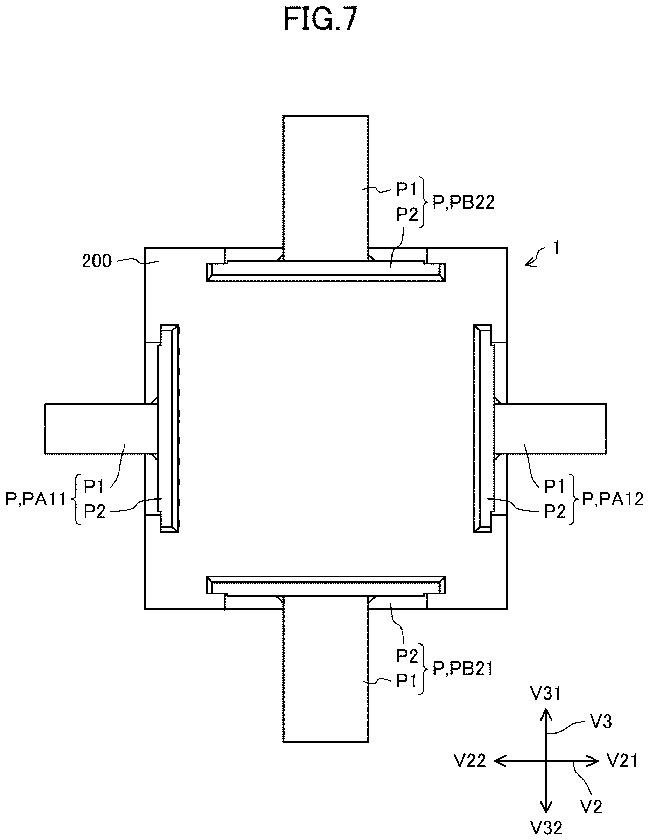

As shown in FIG. 7, the insertion members (P) in the heat exchanger (1) include a pair of first insertion members (PA11, PA12) arranged in the second direction (V2) and a pair of second insertion members (PB21, PB22) arranged in the third direction (V3).

As shown in FIG. 7 and FIG. 8A, the first refrigerant flows into the refrigerant pipe (P1) of the first insertion member (PA11), passes through the refrigerant pipe (P1), and then is sent to the first flow path member (111A) through the gap (Q1). The first refrigerant having been sent to the first flow path member (111A) is sent through the first flow path (R1) formed by the first flow path member (111A) (see FIG. 8B), and then is discharged from the heat exchanger (1) through the refrigerant pipe (P1) of the first insertion member (PA12).

As shown in FIG. 7 and FIG. 8B, the second refrigerant flows into the refrigerant pipe (P1) of a second insertion member (PA21), passes through the refrigerant pipe (P1), and then is sent to the second flow path member (111B) through the gap (Q2). The second refrigerant having been sent to the second flow path member (111B) is sent through the second flow path (R2) (see FIG. 8B) formed by the second flow path member (111B), and then is discharged from the heat exchanger (1) through the refrigerant pipe (P1) of the second insertion member (PA22).

As shown in FIGS. 5A and 5B, the flow path member (111) is supported by the spacer member (112). The spacer member (112) has a groove (112a), and by the flow path member (111) being fitted (attached) to the groove (112a), the flow path member (111) is positioned with respect to the spacer member (112). In this embodiment, the partition member (120) includes a plurality of frame portions arranged around the flow path member (111); Among the frame portions, a pair of frame portions (112A4, 112B3) facing each other via the flow path member (111) have a groove (112a); the flow path member (111) is fitted into the groove (112a); and the gap (Q1, Q2) is provided between the flow path member (111) and each of the other pair of frame portions (112A3, 112B4) facing each other via the flow path member (111). The groove (112a) is shaped so that the surface of each of the pair of frame portions (112A4, 112B3) that faces the flow path member (111) is recessed. As shown in FIGS. 8A and 8B, the refrigerant is sent to the flow path member (111) through one of the pair of gaps (Q1, Q2), and is sent to the outside of the flow path member (111) through the other one of the pair of gaps (Q1, Q2). Each of the plurality of partition members (120) is comprised of one member of which the plurality of frame portions are connected in an annular shape to surround the flow path member (111).

### (4) Brazing

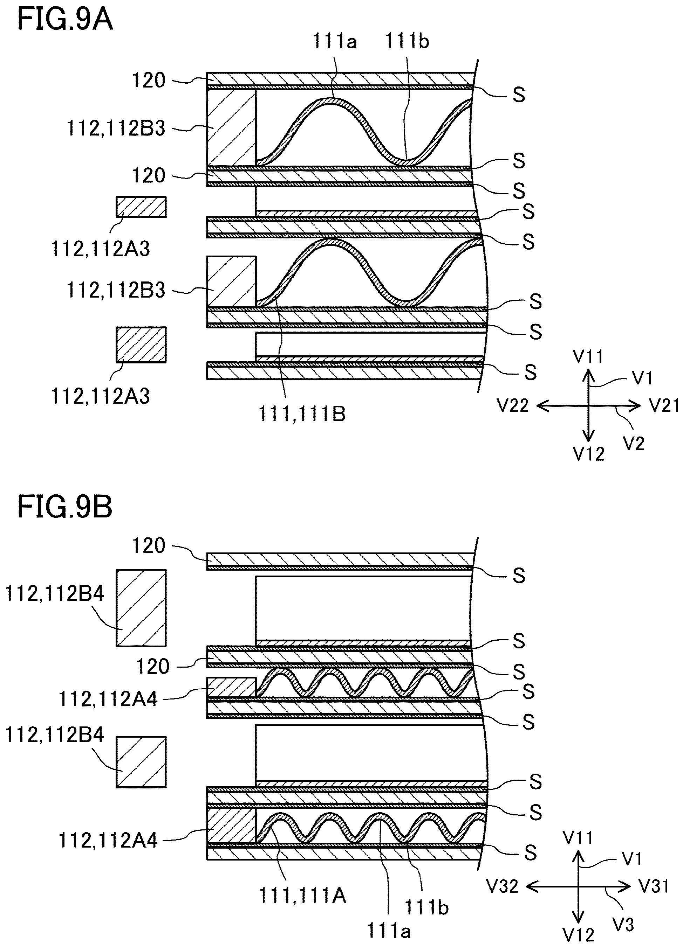

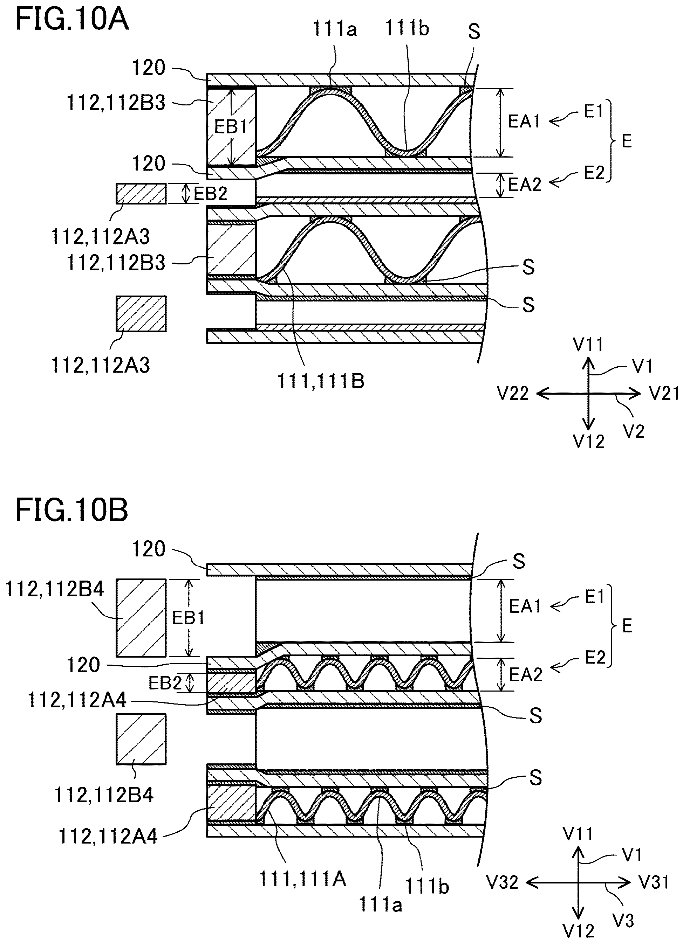

The flow path members (111), the spacer members (112), the partition member (120), the first plate member (200), and the second plate member (300) are separate members from each other. FIGS. 9A and 9B show the state of the components of the heat exchanger (1) before brazing. FIGS. 10A and 10B show the state of the components of the heat exchanger (1) after brazing. As shown in FIGS. 9A to 10B, the components of the heat exchanger (1) (the flow path members (111), the spacer members (112), the partition member (120), the first plate member (200), and the second plate member (300)) are joined to each other by brazing. The components of the heat exchanger (1) are joined by furnace brazing with a brazing material (S) made of a copper alloy, for example.

Brazing is a process of placing the brazing material (S) between the components of the heat exchanger (1) (for example, between the flow path member (111) and the partition member (120) and between the spacer member (112) and the partition member (120)); melting the brazing material (S) by heating; and spreading the brazing material (S) in the gap between the joint surfaces of the components of the heat exchanger (1) in order to join the joint surfaces of the components with the brazing material (S). Through brazing, the flow path members (111), the spacer members (112), the partition member (120), the first plate member (200), and the second plate member (300) are joined to each other by the brazing material (S), and consequently the heat exchanger (1) is manufactured. The components of the heat exchanger (1) that are formed by pressing at the time of brazing may be deburred after being formed by pressing so that variations in height among the components due to burrs are reduced.

Hereinafter, among the partition members (120) that sandwich the flow path member (111) from both sides in the first direction (V1), the partition member (120) located on one direction side (V11) of the first direction (V1) with respect to the flow path member (111) may be referred to as the "first partition member," and the partition member (120) located on the other direction side (V12) of the first direction (V1) with respect to the flow path member (111) may be referred to as the "second partition member."

In this embodiment, the partition member (120) is deformed (plastically deformed) due to a decrease in the elastic modulus caused by heating at the time of brazing and its own weight. In this embodiment, through brazing, the first partition member and the second partition member are deformed (bent or curved) so that the plurality of mountain portions (111a) of the flow path member (111) are joined to the first partition member using a brazing material (S), and the plurality of valley portions (111b) of the flow path member (111) are joined to the second partition member using the brazing material (S).

### (5) Dimensions of Components of Heat Exchanger

In this embodiment, the plurality of layer members (110) of the heat exchanger (1) is comprised of layer members of which the number is M. That is, the total number of layer members (110) is M. The number M is a natural number that is larger than or equal to two. Hereinafter, among the layer members (110) of which the number is M, the layer members (110) of which the number is N may be referred to as an arbitrary layer member (E). The number N is a natural number that is larger than or equal to two and smaller than or equal to M. In this embodiment, the arbitrary layer member (E) includes two layer members (110) (N = 2) (a layer member (E1) as the uppermost layer and a layer member (E2) as the second uppermost layer in FIGS. 10A and 10B).

The sum of the dimensions of all the flow path members (111) in the first direction (V1) that form the arbitrary layer member (E) of the heat exchanger (1) may be referred to as a first sum EA. In this embodiment, the first sum EA is the sum of the dimension EA1 and dimension EA2 (EA = EA1 + EA2).

The sum of the dimensions of all the spacer members (112) in the first direction (V1) that form the arbitrary layer member (E) of the heat exchanger (1) may be referred to as a second sum EB. In this embodiment, the second sum EB is the sum of the dimension EB1 and the dimension EB2 (EB = EB1 + EB2).

For the heat exchanger (1), the absolute value of the difference between the first sum EA and the second sum EB may be referred to as a first difference F (F = |EA - EB|).

In this embodiment, the first difference F is 100 µm or less (F ≤ 100 µm). Further, the first difference F is 50 µm or less (F ≤ 50 µm) in one preferred embodiment. Further, the first difference F is 10 µm or less (F ≤ 10 µm) in one preferred embodiment.

In each of the plurality of the layer members (110) of the heat exchanger (1), the absolute value of the difference between the dimension of the flow path member (111) and the dimension of the spacer member (112) in the first direction (V1) is 10 µm or less (|EA1 - EB1| ≤ 10 µm, |EA2 - EB2| ≤ 10 µm, and the like).

Hereinafter, the sum of the dimensions of all the flow path members (111) (the flow path members (111) of which the number is M) in the first direction (V1) that form the plurality of layer members (110) of the heat exchanger (1) may be referred to as a third sum GA.

The sum of the dimensions of all the spacer members (112) (the spacer members (112) of which the number is M) in the first direction (V1) that form the plurality of layer members (110) of the heat exchanger (1) may be referred to as a fourth sum GB.

For the heat exchanger (1), the absolute value of the difference between the third sum GA and the fourth sum GB may be referred to as a second difference H (H = |GA - GB|).

In this embodiment, the second difference H is 5 × M µm or less (H ≤ 5 × M µm). Further, the second difference H is 2 × M µm or less (H ≤ 2 × M µm) in one preferred embodiment.

### (6) Shapes of Components of Heat Exchanger after Brazing

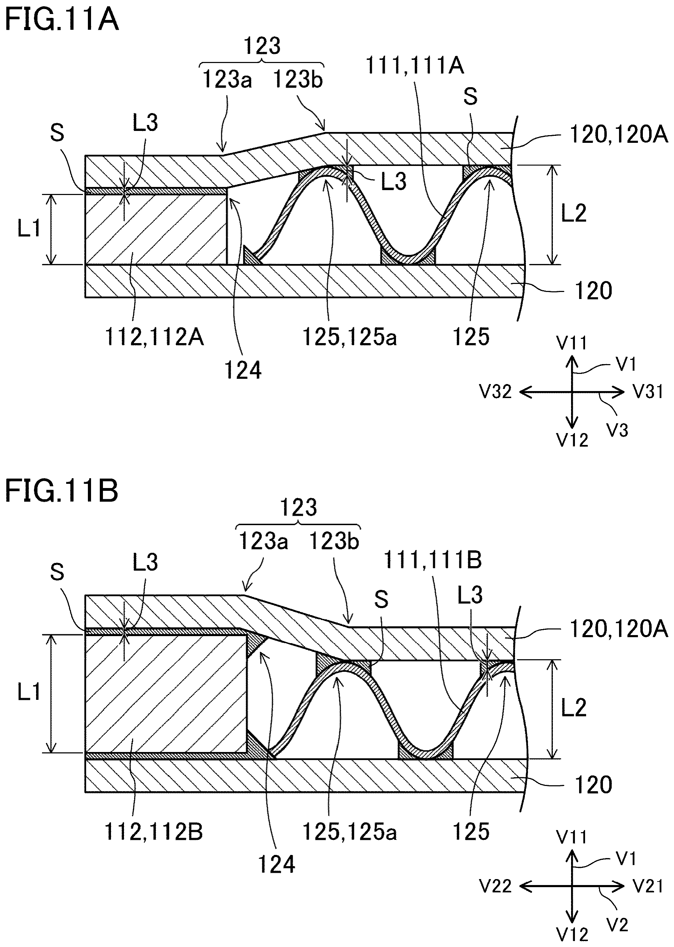

FIGS. 11A and 11B show the shapes of the components of the heat exchanger (1) after brazing. Hereinafter, among the partition members (120), the partition member (120) having a deformed portion (123) that is bent or curved may be referred to as a deformed partition member (120A). The deformed partition member (120A) originally does not have the deformed portion (123) and has a flat shape before brazing, but is provided with the deformed portion (123) through brazing. As shown in FIGS. 11A and 11B, the deformed portion (123) of the deformed partition member (120A) is located between a place (124) and a place (125a), where the place (124) is a part of the joint portion between the deformed partition member (120A) and the spacer member (112) that is closest to the flow path member (111), and the place (125a) is a part of the joint portion (125) between the deformed partition member (120A) and the flow path member (111) that is closest to the spacer member (112). In this embodiment, the deformed portion (123) includes a first deformed portion (123a) at the place (124) that is a bent or curved portion of the deformed partition member (120A) and a second deformed portion (123b) at the place (125a) that is a bent or curved portion of the deformed partition member (120A).

With the deformed partition member (120A) having the deformed portion (123), the difference between the dimension L1 of the spacer member (112) and the dimension L2 of the flow path member (111) in the first direction (V1) can be absorbed by deformation of the deformed portion (123), and accordingly the absolute value of the difference can be 10 µm or less (|L1 - L2| ≤ 10 µm).

The absolute value of the difference between the dimension L1 of the spacer member (112) and the dimension L2 of the flow path member (111) is greater in the stacking direction (V1) than the dimension of the brazing material (S) (|L1 - L2| > L3). Regardless of this configuration, with the deformed portion (123) allowing the deformed partition member (120A) to be bent or curved, the components of the heat exchanger (1) can be effectively joined to each other while a gap is less created between the joint surfaces of the components of the heat exchanger (1). Further, since the difference between the dimension of the spacer member (112) and the dimension of the flow path member (111) can be absorbed by deformation of the partition member (120), it is unnecessary to conduct a complicated operation, such as adjusting the dimension L1 of the spacer member (112) and the dimension L2 of the flow path member (111) in order to eliminate the difference between the dimension L1 of the spacer member (112) and the dimension L2 of the flow path member (111) in the stacking direction (V1). As a result, the heat exchanger (1) can be easily manufactured.

### (7) Advantages

As described above, the arbitrary layer member (E) includes the layer members (110) of which the number is N among the layer members (110) of which the number is M. The number N is a natural number that is larger than or equal to two and smaller than or equal to M. The first difference F, which is the absolute value of the difference between the sum (the first sum EA) of the dimensions of all the flow path members (111) that form the arbitrary layer member (E) and the sum (the second sum EB) of the dimensions of all the spacer members (112) that form the arbitrary layer member (E) in the first direction (V1) (the stacking direction) (F = |EA - EBI), is 100 µm or less (F ≤ 100 µm). Further, the first difference F is 50 µm or less (F ≤ 50 µm) in one preferred embodiment. Further, the first difference F is 10 µm or less (F ≤ 10 µm) in one preferred embodiment. Accordingly, the height of the heat exchanger (1) (the dimension in the first direction (V1)) can be adjusted by collectively dealing with the plurality of layers (the layer members (110) of which the number is N (two or more)), and thus the manufacture of the heat exchanger (1) can be easily manufactured. Further, at the time of manufacturing the heat exchanger (1), it is unnecessary to conduct a complicated operation, such as adjusting the height of the flow path member (111) and the height of the spacer member (112) one by one for each layer, and thus it is possible to reduce an increase in the manufacturing costs of the heat exchanger (1). Further, the accuracy of the components of the heat exchanger (1) has a tolerance, such as the first difference F, whereby the heat exchanger (1) can be easily manufactured while it is possible to reduce an increase in the fraction defective of the heat exchanger (1).

### (8) Variation of Heat Exchanger

In particular, the differences between a variation of the heat exchanger (1) and the heat exchanger (1) shown in FIGS. 1 to 8 will be described.

The variation of the heat exchanger (1) includes a layered body (100), a first plate member (200), and a second plate member (300). The layered body (100) includes a plurality of layer members (110) and partition members (120). Each of the plurality of layer members (110) includes a flow path member (111) and a spacer member (112).

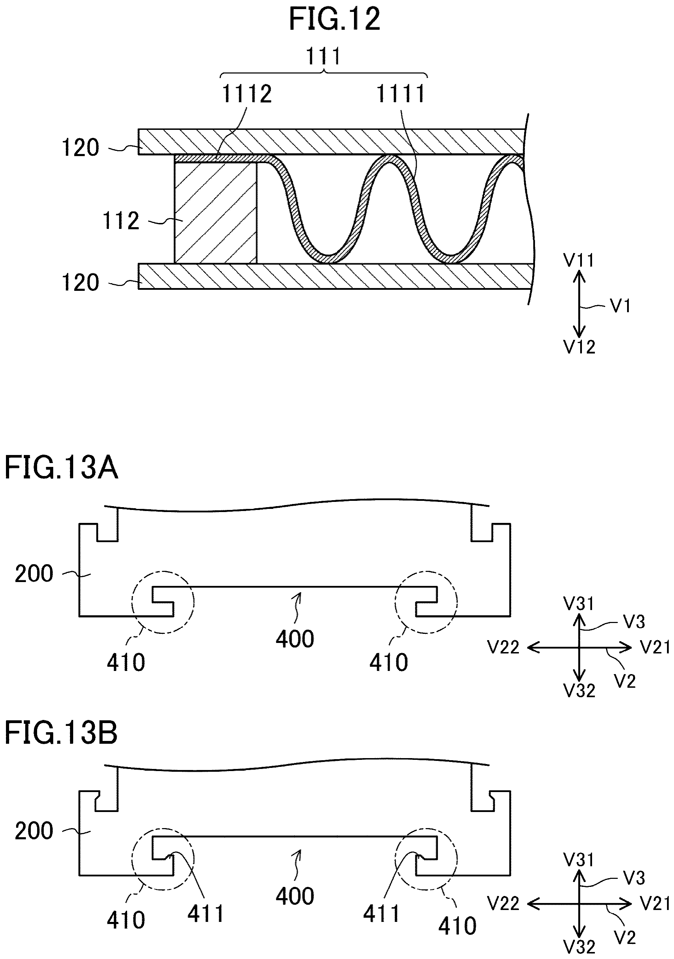

FIG. 12 is a partial cross-sectional view of the variation of the heat exchanger (1). As shown in FIG. 12, each of the plurality of flow path members (111) includes a first portion (1111) and a second portion (1112). The first portion (1111) is disposed in the direction perpendicular to the first direction (V1) with respect to the spacer member (112). The second portion (1112) is sandwiched between the spacer member (112) and the partition member (120). The second portion (1112) only needs to be located on the one direction side (V11) of the first direction (V1) or the other direction side (V12) of the first direction (V1) with respect to the spacer member (112).

The flow path members (111), the spacer members (112), the partition member (120), the first plate member (200), and the second plate member (300) are separate members from each other. In the variation of the heat exchanger (1), the components are joined with each other by brazing. The partition member (120) is deformed (plastically deformed) due to a decrease in the elastic modulus caused by heating at the time of brazing and its own weight.

The sum of the dimensions of the first portions of all the flow path members (111) in the first direction (V1) that form the arbitrary layer member (E) of the variation of the heat exchanger (1) may be referred to as a fifth sum. The sum of the dimensions of the second portions (1112) of all the flow path members (111) in the first direction (V1) that form the arbitrary layer member (E) of the variation of the heat exchanger (1) and the dimensions of all the spacer members (112) in the first direction (V1) that form the arbitrary layer member (E) of the variation of the variation of the heat exchanger (1) may be referred to as a sixth sum. For the variation of the heat exchanger (1), the absolute value of the difference between the fifth sum and the sixth sum may be referred to as a third difference.

In this embodiment, the third difference is 100 µm or less. Further, the third difference is 50 µm or less in one preferred embodiment. Further, the third difference is 10 µm or less in one preferred embodiment.

For each of the plurality of layer members (110), the absolute value of the difference between the first dimension and the second dimension is 10 µm or less. The first dimension is the dimension of the first portion (1111) of the variation of the heat exchanger (1) in the first direction (V1). The second dimension is the sum of the dimension of the second portions (1112) and the dimension of the spacer members (112) of the variation of the heat exchanger (1) in the first direction (V1).

The total number of the layer members (110) in the variation of the heat exchanger (1) is defined as M. Hereinafter, the sum of the dimensions of the first portions (1111) (the first portions (1111) of which the number is M) of all the flow path members (111) in the first direction (V1) that form the plurality of layer members (110) of the variation of the heat exchanger (1) may be referred to as a seventh sum. The sum of the dimensions of all the second portions (1112) (the second portions (1112) of which the number is M) and the dimensions of all the spacer members (112) (the spacer members (112) of which the number is M) in the first direction (V1) that form the plurality of layer members (110) of the variation of the heat exchanger (1) may be referred to as an eighth sum. For the variation of the heat exchanger (1), the absolute value of the difference between the seventh sum and the eighth sum may be referred to as a fourth difference.

In this embodiment, the fourth difference is 5 × M µm or less. Further, the fourth difference is 2 × M µm or less in one preferred embodiment.

The variation of the heat exchanger (1) also includes a deformed partition member that is bent or curved similarly to the deformed partition member (120A) of the partition member (120) (see FIGS. 11A and 11B). In the variation of the heat exchanger (1), the deformed partition member has a deformed portion that is bent or curved, and the deformed portion is located between the place that is a part of the joint portion between the deformed partition member and the spacer member (112) that is closest to the first portion (1111) of the flow path member (111) and the place that is a part of the joint portion (125) between the deformed partition member and the second portion (1112) that is closest to the spacer member (112).

In the variation of the heat exchanger (1), for at least one layer member (110) among the plurality of layer members (110), the absolute value of the difference between the first dimension and the second dimension is greater than the dimension of the brazing material (S) in the stacking direction (V1).

The absolute value of the difference between the sum of the dimensions of the spacer member (112) and the second portion (1112) and the dimension of the first portion (1111) is greater in the stacking direction (V1) than the dimension of the brazing material (S).

### (9) Shape of Insertion Portion

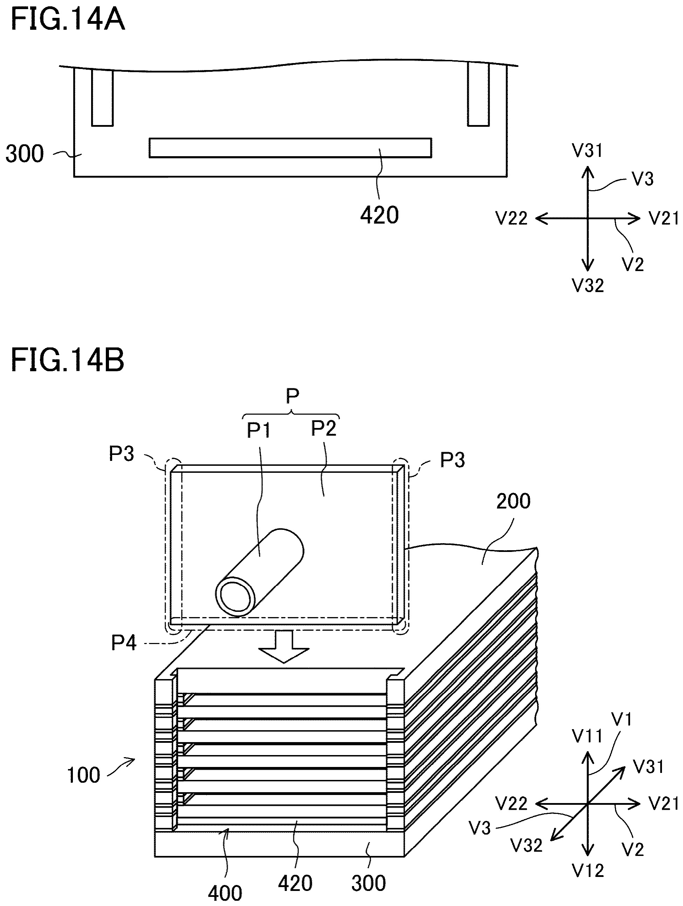

As shown in FIGS. 13A and 13B, the insertion portion (400) includes a locking portion (410). The locking portion (410) is a part of the insertion portion (400) that locks the end portion (P3) of the plate portion (P2) of the insertion member (P) (see FIG. 14B). The end portion (P3) is an end portion located in the direction perpendicular to the first direction (V1). As shown in FIG. 13A, the locking portion (410) has a C-shape as viewed in the first direction (V1). As shown in FIG. 13B, the locking portion (410) may have a hook shape as viewed in the first direction (V1). The hook shape of the locking portion (410) consists of a C-shape as viewed in the first direction (V1) and also a protrusion (411) that is provided at a portion corresponding to an opening of the C-shape and that protrudes so as to narrow the opening of the C-shape.

As shown in FIGS. 14A and 14B, the insertion portion (400) may include a slit portion (420). The slit portion (420) is a hole formed in the second plate member (300). The slit portion (420) of this embodiment has the shape obtained by creating a hole at the mount portion (303) of FIG. 4B. The insertion member (P) is inserted into the slit portion (420). Specifically, the end portion (P4) of the plate portion (P2) of the insertion member (P) is inserted into the slit portion (420). The end portion (P4) is an end portion located on the other direction side (V12) of the first direction (V1). The insertion portion (400) may include both the C-shaped locking portion (410) and the slit portion (420). The insertion portion (400) may include both the hook-shaped locking portion (410) and the slit portion (420).

It will be understood that the embodiment and variations described above can be modified with various changes in form and details without departing from the spirit and scope of the claims. The embodiment, the variation thereof, and the other embodiments may be combined and replaced with each other without deteriorating intended functions of the present disclosure.

The expressions such as "first," "second," "third," . . . , described above are used to distinguish the terms to which these expressions are given, and do not limit the number and order of the terms.

### INDUSTRIAL APPLICABILITY

As described above, the present disclosure is useful for a heat exchanger and a method of manufacturing the heat exchanger.

### DESCRIPTION OF REFERENCE CHARACTERS

- 1: Heat Exchanger
- 110: Layer Member
- 111: Flow Path Member
- 112: Spacer Member
- 120: Partition Member
- E: Arbitrary Layer Member
- V1: First Direction (Stacking Direction)

## Claims

1. A heat exchanger comprising:
a plurality of layer members (110) that are stacked; and
a partition member (120) between the plurality of layer members (110) adjacent to each other,
wherein
each of the plurality of layer members (110) includes
a flow path member (111) forming a flow path of a refrigerant, and
a spacer member (112) disposed in a direction perpendicular to a stacking direction (V1) of the layer members (110) with respect to the flow path member (111),
the plurality of layer members (110) include layer members (110) of which the number is M,
the number M is a natural number that is larger than or equal to two,
the plurality of layer members (110) include an arbitrary layer member (E) that includes layer members (110) of which the number is N among the layer members (110) of which the number is M,
the number N is a natural number that is larger than or equal to two and smaller than or equal to M, and
a first difference, which is an absolute value of a difference between a sum of dimensions of all the flow path members (111) that form the arbitrary layer member (E) and a sum of dimensions of all the spacer members (112) that form the arbitrary layer member (E) in the stacking direction (V1), is 100 µm or less.

2. The heat exchanger of claim 1, wherein
the first difference is 50 µm or less.

3. The heat exchanger of claim 2, wherein
the first difference is 10 µm or less.

4. The heat exchanger of any one of claims 1 to 3, wherein
in each of the plurality of the layer members (110), an absolute value of a difference between a dimension of the flow path member (111) and a dimension of the spacer member (112) in the stacking direction (V1) is 10 µm or less.

5. The heat exchanger of any one of claims 1 to 4, wherein
the partition member (120) includes a deformed partition member (120A) having a deformed portion (123) that is bent or curved.

6. The heat exchanger of claim 5, wherein
the deformed portion (123) is located between a place (124) and a place (125a), where the place (124) is a part of a joint portion between the deformed partition member (120A) and the spacer member (112) that is closest to the flow path member (111), and the place (125a) is a part of a joint portion (125) between the deformed partition member (120A) and the flow path member (111) that is closest to the spacer member (112).

7. The heat exchanger of any one of claims 1 to 6, wherein
a second difference, which is an absolute value of a difference between a sum of dimensions of all the flow path members (111) that form the plurality of layer members (110) and a sum of dimensions of all the spacer members (112) that form the plurality of layer members (110) in the stacking direction (V1), is 5 × M µm or less.

8. The heat exchanger of claim 7, wherein
the second difference is 2 × M µm or less.

9. The heat exchanger of any one of claims 1 to 8, wherein
the partition member (120) and the layer member (110) adjacent to each other in the stacking direction (V1) are joined to each other by a brazing material (S),
in at least one of the plurality of layer members (110),
an absolute value of a difference between a dimension of the spacer member (112) and a dimension of the flow path member (111) is greater in the stacking direction (V1) than a dimension of the brazing material (S).

10. A heat exchanger comprising:
a plurality of layer members (110) that are stacked; and
a partition member (120) between the plurality of layer members (110) adjacent to each other,
wherein
each of the plurality of layer members (110) includes
a flow path member (111) forming a flow path of a refrigerant, and
a spacer member (112),
the flow path member (111) includes a plurality of flow path members (111), each of which includes
a first portion (1111) disposed in a direction perpendicular to a stacking direction (V1) of the layer members (110) with respect to the spacer member (112), and
a second portion (1112) sandwiched between the spacer member (112) and the partition member (120),
the plurality of layer members (110) include an arbitrary layer member (E) that includes two or more of the plurality of layer members (110), and
a third difference, which is an absolute value of a difference between a sum of dimensions of the first portions (1111) of all the flow path members (111) that form the arbitrary layer member (E) and a sum of dimensions of the second portions (1112) of all the flow path members (111) that form the arbitrary layer member (E) and dimensions of all the spacer members (112) in the stacking direction (V1), is 100 µm or less.

11. The heat exchanger of any one of claims 1 to 10, further comprising:
an insertion portion (400) into which an insertion member (P) provided with a refrigerant pipe (P1) is inserted.

12. The heat exchanger of claim 11, wherein
the insertion portion (400) includes a locking portion (410) that locks an end portion (P3) of the insertion member (P), and
the locking portion (410) has a C-shape or a hook shape.

13. The heat exchanger of claim 11 or 12, wherein
the insertion portion (400) includes a slit portion (420) into which the insertion member (P) is inserted.

14. The heat exchanger of any one of claims 1 to 13, wherein
the flow path member (111) includes a plurality of mountain portions (111a) raised toward one direction side (V11) of the stacking direction (V1) and a plurality of valley portions (111b) raised toward another direction side (V12) of the stacking direction (V1), the plurality of mountain portions (111a) and the plurality of valley portions (111b) are arranged alternately in the stacking direction (V1),
the partition member (120) includes a first partition member located on the one direction side (V11) of the stacking direction (V1) with respect to the flow path member (111) and a second partition member located on the other direction side (V12) of the stacking direction (V1) with respect to the flow path member (111), and
at least one of the first partition member and the second partition member has a bent or curved shape so that each of the plurality of mountain portions (111a) of the flow path member (111) is joined to the first partition member using a brazing material, and each of the plurality of valley portions (111b) of the flow path member (111) is joined to the second partition member using a brazing material.

15. A method of manufacturing a heat exchanger that includes
a plurality of layer members (110) that are stacked; and
a partition member (120) between the plurality of layer members (110) adjacent to each other,
wherein
each of the plurality of layer members (110) includes
a flow path member (111) forming a flow path of a refrigerant, and
a spacer member (112) disposed in a direction perpendicular to a stacking direction (V1) of the layer members (110) with respect to the flow path member (111),
the plurality of layer members (110) include an arbitrary layer member (E) that includes two or more of the plurality of layer members (110), and
a first difference, which is an absolute value of a difference between a sum of dimensions of all the flow path members (111) that form the arbitrary layer member (E) and a sum of dimensions of all the spacer members (112) that form the arbitrary layer member (E) in the stacking direction (V1), is 100 µm or less,
the method comprising:
brazing the partition member (120), the flow path member (111), and the spacer member (112), while deforming the partition member (120).
